# EUROPÄISCHE PATENTSCHRIFT

(11) **EP 0 410 487 B1**
(45) Veröffentlichungstag und Bekanntmachung des Hinweises auf die Patenterteilung: **18.11.1993**
(21) Anmeldenummer: 90114503.7
(22) Anmeldetag: 27.07.1990
(51) Int. Cl.: B60J 7/057

(54) **Notantrieb einer elektromotorisch antreibbaren Antriebseinheit**
Emergency drive for an electricly powered regulator
Commande de secours pour un élément d'entraînement par éléctromoteur

(30) Priorität: 28.07.1989 DE 8909180 U
(43) Veröffentlichungstag der Anmeldung: 30.01.1991
(73) Patentinhaber: Mösslacher, Hannes, D-81249 München (DE)
(72) Erfinder: Mösslacher, Hannes, D-81249 München (DE)
(74) Vertreter: Viering, Jentschura & Partner

(56) Entgegenhaltungen:
- EP-A- 0 299 156

## Beschreibung

Die Erfindung betrifft einen insbesondere handkurbelbetreibbaren Notantrieb einer mittels eines Elektromotors antreibbaren Antriebseinheit, insbesondere für Schiebedächer von Kraftfahrzeugen, wobei die Antriebseinheit ein an den Elektromotor angeschlossenes Getriebe aufweist, dessen aus dem Getriebe heraustretendes Abtriebsteil mit dem zu betätigenden Mechanismus zusammenwirkt.

Derartige Notantriebe, die trotz Defekt des Elektromotors weiterhin eine Betätigung des von der Antriebseinheit antreibbaren Mechanismus von außen zulassen, sind bereits seit längerem bekannt. Ein solcher Notantrieb wird meistens manuell mit einer Handkurbel betätigt. Insbesondere bei Schiebedächern von Kraftfahrzeugen muß weiterhin die Möglichkeit des Öffnens und Schließens des Schiebedachs gewährleistet bleiben. Da gerade beim Unterbringen eines Elektromotors zum Antreiben von Schiebedächern Bauraumprobleme auftreten, verwendet man sehr kleine Elektromotoren mit einem geringen Drehmoment bei höherer Drehzahl mit einem nachgeschalteten Getriebe hoher Übersetzung, meistens ein Schneckengetriebe, womit sich das Schiebedach mit gewünschter Geschwindigkeit bei hoher Öffnungs- und Schließkraft betätigen läßt.

Da bei herkömmlichen Notantrieben das Abtriebsteil, meist ein Zahnrad, Schneckenrad oder ein Riementrieb, welcher aus dem Getriebe austritt und mit dem anzutreibenden Mechanismus, wie beispielsweise einem Schiebedachmechanismus, zusammenwirkt, zum Zweck der Notbetätigung nicht von dem Getriebe und damit auch dem Motor entkuppelt werden kann, entstehen aufgrund der hohen Übersetzung und des dazu meistens verwendeten Schneckengetriebes Schwierigkeiten bei der Notbetätigung von Hand.

Es sind verschiedene Arten von Notantrieben bekannt. So ist es beispielsweise bekannt, die Motorwelle des Elektromotors mit einer Schnecke großer Steigung und das Abtriebsteil oder das in die Schnecke eingreifende Schneckenrad (EP-A-0 299 156) mit einer formschlüssigen Aufnahme für eine Handkurbel zu versehen. Mit sehr hohem Kraftaufwand läßt sich dann die Schnecke über das Getriebe bzw. das mit der Schnecke kämmende Schneckenrad drehen und mit der Schnecke die gesamte Motorwelle. Als nachteilig hat sich dabei herausgestellt, daß eine sehr hohe Handkraft erforderlich ist und die Schnecke aufgrund ihrer hohen Steigung keine zufriedenstellende Selbsthemmung mehr gewährleistet. Dadurch verschiebt sich das Schiebedach unter Umständen unerwünschterweise von alleine, insbesondere aufgrund von Vibrationen und Stößen durch Bodenunebenheiten beim Fahren.

Ein anderer herkömmlicher Notantrieb sieht an der verlängerten Motorwelle einen formschlüssig aufsteckbaren Drehknebel vor, durch welchen die Motorwelle von Hand gedreht werden kann. Nachteilig ist hierbei, daß sehr viele Umdrehungen aufgrund der hohen Getriebeübersetzung erforderlich sind, um das Notbetätigen durchzuführen. Dadurch ergeben sich entsprechend lange Notbetätigungszeiten, die in vielen Anwendungsfällen nicht geduldet werden können. Dies trifft insbesondere auch auf einige andere Anwendungen als für Schiebedächer zu. Ein weiteres Problem dieser Art des Notantriebs ist das Abdichten des Motors, d.h. der Stelle, an der die verlängerte Motorwelle austritt. Herkömmlicherweise tritt die verlängerte Motorwelle an der der Getriebeanflanschseite entgegengesetzten Seite des Motors aus. Das Getriebe ist an den Motor angeflanscht und verursacht keine Dichtungsprobleme, da die dort aus dem Motorgehäuse austretende und in das Getriebe eindringende Motorwelle von dem Getriebegehäuse völlig umschlossen ist. Dichtungsprobleme treten daher nur an der Seite des Motors auf, an der sich herkömmlicherweise die zum Aufstecken eines Drehknebels ausgebildete Verlängerung der Motorwelle befindet.

Ein weiterer herkömmlicher Notantrieb sieht eine reibschlüssige Kupplung zwischen dem Abtriebsteil und dem Getriebe vor. Dabei wird die Kupplungskraft von Tellerfedern aufgebracht. Im Falle einer Notbetätigung lassen sich die Tellerfedern entspannen und damit das Abtriebsteil unabhängig vom Getriebe und Motor drehen. Als nachteilig hat sich hierbei jedoch erwiesen, daß zum erneuten Spannen der Tellerfedern und damit zum Einstellen der Kupplungskraft ein erheblicher Montageaufwand erforderlich wird und damit eine Werkstatt aufgesucht werden muß. Weitere Nachteile ergeben sich dadurch, daß nach Lösen der Kupplung üblicherweise keine Positionserkennung mehr möglich ist sowie dadurch, daß die Kupplungskraft und damit das übertragbare Kupplungsmoment sich mit der Zeit ändern.

Es ist auch ein manueller Notantrieb eines von einem Elektromotor angetriebenen Fensterhebers eines Kraftfahrzeugs bekannt (US-PS 4 084 629), wobei das als Kabeltrommel ausgebildete Abtriebsteil und ein koaxial dazu angeordnetes Getriebezahnrad über ein in diese formschlüssig und drehmomentübertragend eingreifendes Keilwellenstück miteinander gekuppelt sind, welches mittels einer Schraube, die in dem Kurbelzapfen einer Handkurbel drehbar aufgenommen ist und nach Einsetzen des Kurbelzapfens in einen Mitnahmeteil der Nabe des Abtriebsteils in einer in der Nabe ausgebildeten Gewindebohrung verschraubbar ist, gegen die Kraft einer Feder aus dem Eingriff mit dem Abtriebsteil axial verschiebbar ist. Dies entspricht dem Prinzip der vorstehend genannten Vorrichtung, für eine Notbetätigung das Getriebe von dem Abtriebsteil zu entkuppeln, damit das Abtriebsteil bei gelöster Getriebeverbindung mit dem Elektromotor von einem direkt an dem Abtriebsteil angreifenden Notbetätigungswerkzeug gedreht werden kann.

Die Erfindung löst die Aufgabe, einen gattungsgemäßen Notantrieb zu schaffen, der ohne zusätzlichen Wiedereinrichtungsaufwand für den normalen Betriebszustand nach ein- oder mehrmaligem Notbetätigen eine leichtgängige Bedienung bei einer geringen Anzahl von Umdrehungen gewährleistet.

Diese Aufgabe wird erfindungsgemäß durch die Merkmale im Patentanspruch 1 gelöst. Somit greift ein mit einer Feder vorgespanntes Notbetätigungsteil in seiner dem normalen Betriebszustand der Antriebseinheit entsprechenden Lage formschlüssig in das Abtriebsteil und in ein koaxiales Getriebezahnrad derart ein, daß das Notbetätigungsteil durch leichten Druck über ein ebenfalls darin formschlüssig einsetzbares Notbetätigungswerkzeug gegen die Federkraft axial aus dem Eingriff mit dem Getriebezahnrad heraus in eine nur noch mit dem Abtriebsteil im Eingriff stehende Notbetätigungslage verschiebbar ist.

Vorzugsweise ist das Notbetätigungsteil an seinem formschlüssig in das Abtriebsteil und das Getriebezahnrad eingreifenden Ende mit einem Führungszapfen versehen, der in einer die Stirnseite des Abtriebsteils durchdringenden Bohrung geführt ist. Dadurch wird eine bessere Führung des Notbetätigungsteils erreicht, wenn dieses durch axiales Verschieben aus dem Eingriff mit dem Getriebezahnrad heraus in die Notbetätigungslage geschoben wird und umgekehrt. Zusätzlich bietet der Führungszapfen die Möglichkeit, eine Schraubendruckfeder auf diesen aufzustecken, die sich mit ihrem einen Ende an dem Notbetätigungsteil und mit ihrem anderen Ende an dem Abtriebsteil abstützt.

Vorzugsweise ist das Notbetätigungswerkzeug eine Handkurbel, die an ihrem in das Notbetätigungsteil einsetzbaren Ende ein Außensechskantprofil aufweist. Es sind aber auch andere Notbetätigungswerkzeuge, wie beispielsweise ein ebenfalls von Hand drehbarer Drehknebel oder eventuell sogar ein zweiter externer Elektromotor möglich.

Der Formschluß des Abtriebsteils und des Getriebezahnrades mit dem Notbetätigungsteil ist vorzugsweise als eine Sechskant-Mitnahme oder zum Übertragen höherer Momente als eine sternförmige Mitnahme ausgebildet, wie sie beispielsweise für Zylinderkopfschrauben bekannt ist, die mit einem hohen Drehmoment angezogen werden müssen.

Der erfindungsgemäße Notantrieb wird nachfolgend anhand eines bevorzugten Ausführungsbeispiels unter Bezugnahme auf die Zeichnung näher erläutert.

In der Zeichnung zeigen:

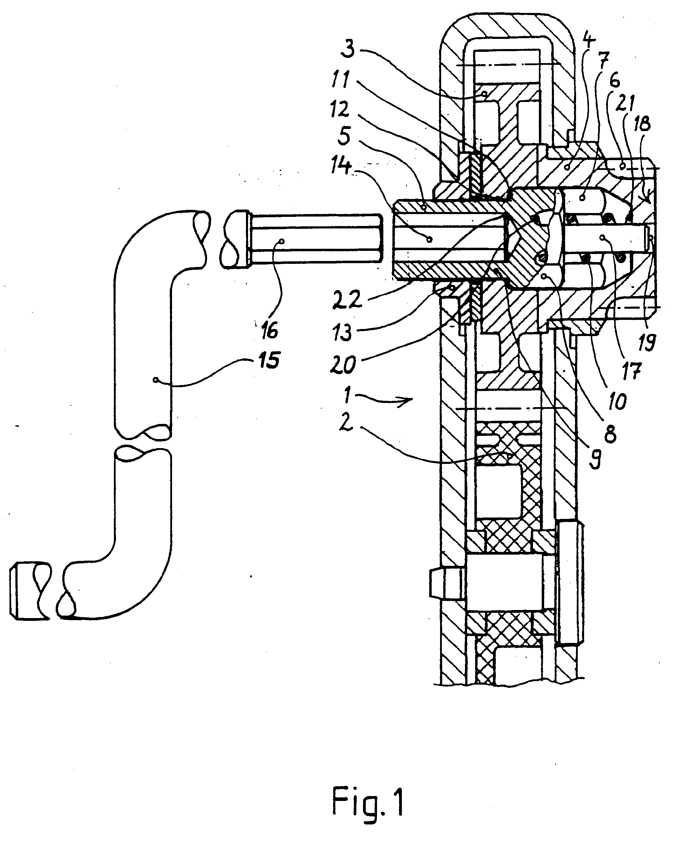

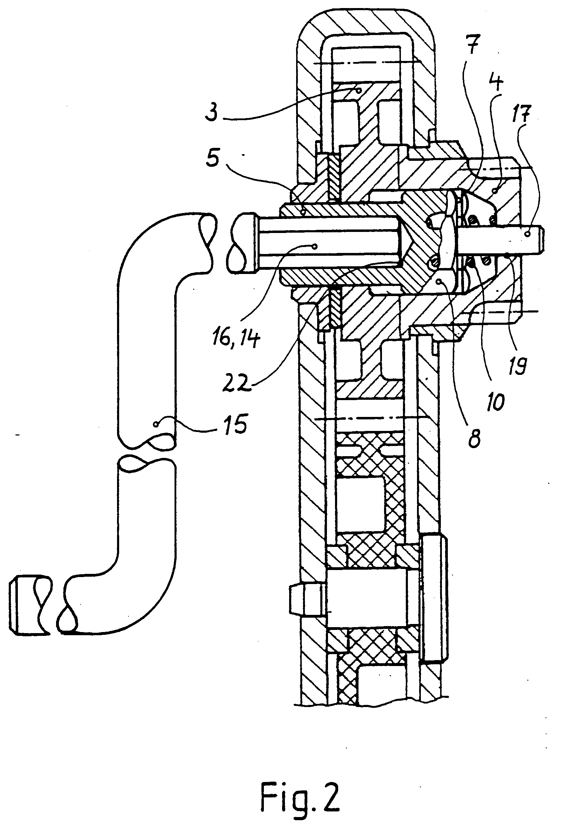

Fig. 1 den erfindungsgemäßen Notantrieb vor dem Einrücken der Handkurbel, wobei sich das Notbetätigungsteil in seiner dem normalen Betriebszustand der Antriebseinheit entsprechenden Lage befindet; und Fig. 2 den erfindungsgemäßen Notantrieb nach dem Einrücken der Handkurbel, wobei sich das Notbetätigungsteil in seiner Notbetätigungslage befindet.

Fig. 1 zeigt eine Teildarstellung des Getriebes 1 im normalen Betriebszustand, also mit nicht in Aktion gesetztem Notantrieb. Ein erstes, in der Zeichnung nur teilweise dargestelltes Getriebezahnrad 2 kämmt mit einer auf die Motorwelle des nicht dargestellten Elektromotors angebrachten Schnecke oder mit einem darauf montierten Stirnrad. Das erste Getriebezahnrad 2 kämmt seinerseits mit einem Getriebezahnrad 3, dessen Rotationsachse koaxial zu einem Abtriebsteil 4 und einem Notbetätigungsteil 5 ist. Das koaxiale Abtriebsteil 4 seinerseits ist über die Verzahnung 6 mit dem anzutreibenden, in der Zeichnung nicht dargestellten Mechanismus verbunden, der beispielsweise ein Schiebedachmechanismus sein kann.

In dem Abtriebsteil 4 und dem koaxialen Getriebezahnrad 3 befindet sich eine sechskantförmige Ausnehmung 7. Die Außenfläche des Notbetätigungsteils 5 gliedert sich in einen außensechskantförmigen und einen zylindrischen Abschnitt (8 bzw. 9). Der außensechskantförmige Abschnitt 8 des Notbetätigungsteils 5 wird in der sechskantförmigen Ausnehmung 7 formschlüssig aufgenommen und stellt somit im normalen Betriebszustand einen Formschluß zwischen dem Abtriebsteil 4 und dem koaxialen Getriebezahnrad 3 her, der zum Übertragen von Drehmomenten von dem koaxialen Getriebezahnrad 3 auf das Abtriebsteil 4 geeignet ist. Im normalen Betriebszustand der Antriebseinheit wird das Notbetätigungsteil 5 von einer vorgespannten Schraubendruckfeder 10 gegen eine in dem Getriebezahnrad 3 befindliche Ringschulter 11 gepreßt, an welcher die sechskantförmige Ausnehmung in dem Getriebezahnrad 3 endet und in eine zylindrische Bohrung 12 übergeht. Durch die zylindrische Bohrung 12 tritt der zylindrische Abschnitt 9 des Notbetätigungsteils 5 durch eine Lagerbuchse 13 aus dem Getriebe 1 heraus.

Der aus dem Getriebe austretende zylindrische Abschnitt 9 des Notbetätigungsteils 5 ist mit einem Innensechskant 14 versehen, in welchen ein an der Handkurbel 15 angeformter Außensechskant 16 einsteckbar ist.

An den außensechskantförmigen Abschnitt des Notbetätigungsteils 5 schließt sich ein Führungszapfen 17 an, der in einer die Stirnseite 18 des Abtriebsteils 4 durchdringenden Bohrung 19 geführt ist. Auf den Führungszapfen 17 ist die vorgespannte Schraubendruckfeder 10 aufgesteckt, die sich mit ihrem einen Ende 20 an dem Notbetätigungsteil 5 in einer darin ausgebildeten Ringnut und mit ihrem anderen Ende 21 an dem Abtriebsteil 4 am Boden der sechskantförmigen Ausnehmung 7 abstützt.

Fig. 2 zeigt eine Darstellung wie Fig.1, jedoch mit eingesetzter Handkurbel 15 und dem in seine Notbetätigungslage verschobenen Notbetätigungsteil 5. Die Handkurbel 15 wurde hierbei mit ihrem angeformten Außensechskant 16 bis zum vom Boden des Innensechskants 14 gebildeten Anschlag 22 in den Innensechskant 14 eingeführt. Über den Anschlag 22 wurde dabei beim Weiterdrücken der Handkurbel 15 das Notbetätigungsteil 5 gegen die Kraft der Schraubendruckfeder 10 mit seinem außensechskantförmigem Abschnitt 8 aus dem formschlüssigen Eingriff mit dem Getriebezahnrad 3 heraus verschoben, wobei ferner der Führungszapfen 17 völlig durch die in dem Abtriebsteil 4 ausgebildete Bohrung 19 gedrückt wurde. Der außensechskantförmige Abschnitt 8 des Notbetätigungsteils 5 steht in dieser Notbetätigungslage nur noch im formschlüssigen Engriff mit der sechskantförmigen Ausnehmung 7 des Abtriebsteils 5 und mit dem an der Handkurbel 15 angeformten Außensechskant 16. Der Abtriebsteil 5 kann nun über die Handkurbel 15 angetrieben werden, ohne daß eine formschlüssige Verbindung mit dem Getriebe 1 und über das Getriebe 1 weiter mit dem Elektromotor besteht.

Nach Beendigung des Notbetätigens und Herausziehen der Handkurbel 15 wird das Notbetätigungsteil 5 von der Schraubendruckfeder 10 wieder in seine normale Betriebslage gedrückt und stellt damit wieder eine formschlüssige, drehmomentübertragende Verbindung zwischen dem koaxialen Getriebezahnrad 3 und dem Abtriebsteil 5 her.

## Patentansprüche

1. Mit einem Werkzeug betreibbarer Notantrieb einer elektromotorisch antreibbaren Antriebseinheit eines zu betätigenden Mechanismus, insbesondere eines Schiebedaches eines Kraftfahrzeugs, mit einem Getriebe (1) mit einem aus diesem heraustretenden, mit dem Mechanismus zusammenwirkenden Abtriebsteil (4), wobei das Getriebe (1) mit dem Elektromotor gekuppelt ist und ein zu dem Abtriebsteil (4) koaxiales Getriebezahnrad (3) sowie ein Kupplungsteil aufweist, welches in seiner dem normalen Betriebszustand entsprechenden Ausgangslage formschlüssig in das Abtriebsteil (4) und in das Getriebezahnrad (3) drehmomentübertragend eingreift und gegen die Kraft einer Feder (10) unter Entkuppeln des Abtriebsteils (4) von dem Getriebezahnrad (3) verschiebbar ist, dadurch gekennzeichnet, daß das Kupplungsteil als Notbetätigungsteil (5) ausgebildet ist, welches mittels des in das Notbetätigungsteil (5) formschlüssig einsetzbaren Werkzeuges (15) durch leichten Druck axial aus dem Eingriff mit dem Getriebezahnrad (3) bei gleichzeitig bestehenbleibendem Eingriff in das Abtriebsteil (4) in eine Notbetätigungslage verschiebbar ist, in welcher das Notbetätigungsteil (5) mittels des Werkzeugs unter Drehen des Abtriebsteils (4) drehbar ist.

2. Notantrieb nach Anspruch 1, dadurch gekennzeichnet, daß das Notbetätigungsteil (5) an seinem formschlüssig in das Abtriebsteil (4) und das koaxiale Getriebezahnrad (3) eingreifenden Ende mit einem Führungszapfen (17) versehen ist, der in einer die Stirnseite (18) des Abtriebsteils (4) durchdringenden Bohrung (19) geführt ist.

3. Notantrieb nach Anspruch 2, dadurch gekennzeichnet, daß die Feder (10) eine Schraubendruckfeder (10) ist, welche auf den Führungszapfen (17) aufgesteckt ist und sich mit ihrem einen Ende (20) an dem Notbetätigungsteil (5) und mit ihrem anderen Ende (21) an dem Abtriebsteil (4) abstützt.

4. Notantrieb nach einem der Ansprüche 1 bis 3, dadurch gekennzeichnet, daß das Notbetätigungswerkzeug (15) eine Handkurbel (15) ist.

5. Notantrieb nach Anspruch 4, dadurch gekennzeichnet, daß das in das Notbetätigungsteil (5) einsetzbare Ende der Handkurbel (15) ein Außensechskantprofil (16) aufweist.

6. Notantrieb nach einem der Ansprüche 1 bis 5, dadurch gekennzeichnet, daß der Formschluß des Abtriebsteils (4) und des Getriebezahnrades (3) mit dem Notbetätigungsteil (5) als eine Sechskant-Mitnahme ausgebildet ist.

7. Notantrieb nach einem der Ansprüche 1 bis 5, dadurch gekennzeichnet, daß der Formschluß des Abtriebsteils (4) und des Getriebezahnrades (3) mit dem Notbetätigungsteil (5) als eine sternförmige Mitnahme ausgebildet ist.

## Claims

1. Stand-by drive operable by an operation tool in a drive unit of a mechanism to be operated, the drive unit being constructed to be actuable by means of an electric motor, in particular for sliding roofs of motor vehicles, comprising a gear transmission (1) having an output gear member (4) which extends from the transmission and cooperates with the mechanism to be operated, wherein the transmission (1) is coupled with the electric motor and comprises a gear wheel (3) disposed coaxially with respect to the output gear member (4) and an coupling member which positively engages in its position corresponding to the normal state of the drive unit the output gear member (4) and the coaxial gear wheel (3) in a torque transmitting manner and in such a way that the coupling member is axially displaceable against the force of the spring (10) for disconnecting the engagement of output gear member (4) with the coaxial gear wheel (3), characterized in that the coupling element is designed as stand-by operation member (5) which is by slight pressure by means of a stand-by operation tool (15) positively insertable into the stand-by operation member (5) axially shiftable out of engagement with the gear wheel (3) into a stand-by operation position while the engagement with the ouput gear member (4) remains, and in this stand-by operation position the stand-by operation member (5) is rotatable by means of the operation tool rotating the output gear member (4).

2. Stand-by drive according to claim 1, characterised in that the end of the stand-by operation member (5) which positively engages the output gear member (4) and the coaxial gear wheel (3) is provided with a pilot journal (17) guided in a bore (19) penetrating the face (18) of the output gear member (4).

3. Stand-by drive according to claim 2, characterised in that the spring (10) is a pressure coil spring (10) surrounding the pilot journal (17) and having one end (20) bearing against the stand-by operation member (5), while the other end of the spring (21) is bearing against the output gear member (4).

4. Stand-by drive according one of claims 1 to 3, characterised in that the stand-by operation tool (15) is a crank handle (15).

5. Stand-by drive according to claim 4, characterised in that the end of the crank handle (15) which is insertable into the stand-by operation member (5) comprises a positive hexagon profile (16).

6. Stand-by drive according to one of claims 1 to 5, characterised in that the positive engagement of the output gear member (4) and the gear wheel (3) with the stand-by operation member (5) is formed as a hexagon driver.

7. Stand-by drive according to one of claims 1 to 5, characterised in that the positive engagement of the output gear member (4) and the gear wheel (3) with the stand-by operation member (5) is formed as a star-shaped driver.

## Revendications

1. Commande de secours d'une unité de transmission entraînée par moteur électrique, pour actionner un mécanisme en particulier des panneaux coulissants des véhicules avec un agencement d'entraînement (1), une partie de désaccouplement coopérant avec cet agencement pour s'en séparer, l'agencement d'entraînement étant couplé avec l'électro-moteur et présentant une roue dentée (3) d'entraînement coaxial à la partie de désaccouplement (4) de même qu'une partie d'accouplement qui s'engage en prise avec conjugaison de forme dans la partie de désaccouplement (4) lorsqu'elle est dans sa position de service correspondante à la situation normale et engrène, en transmission de couple avec la roue dentée de la transmission tout en pouvant coulisser contre la force d'un ressort (10) dans le cas ou l'on désaccouple la partie de désaccouplement (4) de la roue dentée d'entraînement (3), caractérisé en ce que, la partie d'accouplement est conçue en tant que partie (5) d'actionnement de secours, en ce qu'elle peut coulisser au moyen de l'outil insérable dans la partie d'actionnement de secours (5) avec conjugaison de forme sous une légère pression axiale dégageant la prise avec la roue d'entraînement (3) tandis que se maintient en permanence et simultanément la prise dans la partie de désaccouplement (3) dans une position d'actionnement de secours dans laquelle la partie (5) d'actionnement de secours est mobile en rotation par actionnement de l'outil lorsque la partie de désaccouplement (4) tourne.

2. Commande de secours selon la revendication 1, caractérisée en ce que la partie d'actionnement de secours (5) est munie en son extrémité conjuguée de forme à la partie de désaccouplement (4) et en ce qu'également l'extrémité vient s'engager en prise coaxiale, avec la roue (3) d'entraînement d'un tourillon de guidage, qui peut être guidé dans un alésage (19) traversant de part en part la face frontale (18) de la partie de désaccouplement (4).

3. Commande de secours selon la revendication 2, caractérisée en ce que le ressort (10) est un ressort de pression à vis, lequel est monté sur le tourillon de guidage (17) et prend appui par l'une de ses extrémités (20) sur la partie (5) d'actionnement de secours et par l'autre de ses extrémités (21) sur la partie de désaccouplement (4).

4. Commande de secours selon l'une des revendications 1 à 3, caractérisée en ce que l'organe de mise en oeuvre du moyen de secours (15) est une poignée de manivelle (15).

5. Commande de secours selon la revendication 4, caractérisée en ce que la partie d'actionnement de secours (5) présente des extrémités insérables de la poignée de manivelle (15) avec un contour extérieur hexagonal (16).

6. Commande de secours selon l'une des revendications 1 à 5, caractérisée en ce que la fermeture par conjugaison de forme de la partie (4) de désaccouplement et de la roue dentée d'entraînement (3) est configurée avec la partie d'actionnement de secours (5) comme un verrouillage présentant six côtés.

7. Commande de secours selon l'une des revendications 1 à 5, caractérisée en ce que la fermeture par conjugaison de forme réalisée dans la partie de désaccouplement (4) et de la roue dentée d'entraînement (3) est réalisée avec la partie d'actionnement de secours (5) comme un verrouillage de forme étoilée.
